Europäisches Patentamt

European Patent Office

Office européen des brevets

(19)

(11) **EP 1 528 560 A1**

(12) **EUROPEAN PATENT APPLICATION**

(43) Date of publication:
**04.05.2005 Bulletin 2005/18**

(51) Int Cl.⁷: **G11B 20/10**

(21) Application number: **04292566.9**

(22) Date of filing: **29.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.10.2003 JP 2003371112**

(71) Applicant: **SONY CORPORATION**
**Tokyo (JP)**

(72) Inventor: **Higashino, Satoru**
**Shinagawa-ku Tokyo (JP)**

(74) Representative: **Thévenet, Jean-Bruno et al**
**Cabinet Beau de Loménie**
**158, rue de l'Université**
**75340 Paris Cédex 07 (FR)**

(54) **Adaptive equalizer decoding device and error detecting device**

(57)     In a waveform equalizer for a communication apparatus, a magnetic recording apparatus, or an optical recording/reproducing apparatus, a feed-forward filter (110) is provided and, at a subsequent stage, a decision feedback equalizer or a fixed delay tree search/decision feedback equalizer (115) employing FDTS for a determination unit is provided. Partial response is performed on only a first portion of inter-symbol interference (ISI) of a waveform equalized by the feed-forward filter and equalization that does not consider subsequent response (i.e., trailing-edge ISI) is performed. A feed-back filter (113) generates a response for the trailing-edge ISI and the decision feedback equalizer structure subtracts the generated response from a response provided by the feed-forward filter so that a result becomes a partial response.

FIG. 2

EP 1 528 560 A1

**Description**

BACKGROUND OF THE INVENTION

1. Field of the Invention

The present invention relates to an adaptive equalizer for equalizing a reproduction waveform to a partial response (PR) in an optical recording apparatus or magnetic recording apparatus, a decoding device using the adaptive equalization, and an error detecting device.

2. Description of the Related Art

Conventionally, an adaptive equalizer for performing adaptive equalization using a least mean square (LMS) algorithm has been known.

An FDTS/DFE, that is, an decision feedback equalizer (DFE) that uses fixed delay tree search (FDTS) as signal-determining means is also known from, for example, J. Moon and L. R. Carley, "Performance comparison of detection methods in magnetic recording", IEEE Transaction on magnetics, Vol. 26, No. 6, November 1990, pp. 3155-3172.

When adaptive equalization is performed using the above-noted LMS algorithm, original data must be provisionally determined from a waveform. When data having a large amount of noise and equalization error and having a low signal difference-to-noise ratio (SDNR) is detected with respect to a threshold to perform provisional determination, the determination result contains a large amount of noise, thus making it difficult to achieve a high-speed prediction with an increased adaptive gain.

This can also be true for a phase locked loop (PLL), auto gain control (AGC), and so on that require a dynamic high-speed operation. That is, detection of data having a low SDNR with respect to a threshold to obtain an error signal leads to a large amount of error, thus making it difficult to achieve a high-speed operation.

Even when an attempt is made to equalize an input waveform having an insufficient output or having a missing portion in a frequency range required for partial response, a frequency range that cannot be equalized remains. Such error remains as an equalization error that strongly depends on the pattern of input data. This causes the performance of a decoding device to greatly decreases, thus leading to an increase in bit error rate (BER).

In the above-described FDTS/DFE, a feed-forward filter (FFF) needs to equalize an input waveform to a waveform that satisfies causality. If leading-edge inter-symbol interference (ISI), i.e., the leading portion of the ISI, of a waveform equalized by the FFF remains to cause a waveform that does not satisfy causality is input to the FDTS/ DFE, the DFE structure cannot remove trailing-edge ISI (i.e., a portion subsequent to the leading-edge ISI). Thus, equalization error resulting from the leading-edge ISI cannot be removed. With the FDTS, therefore, equalization error resulting from the leading-edge ISI leads to an increase in error rate.

Typically, FFFs are provided with a noise-whitening function. This is intended to allow the FDTS to improve the determination performance based on noise whitening. However, depending on an input waveform, it is quite difficult to design an FFF having a noise-whitening capability while satisfying the causality.

Further, when an FFF is selected based on the criterion that satisfies the causality with a noise-whitening capability, a detection distance in the FDTS is prone to be shorter compared to known PR equalization.

With an FFF performing equalization that dos not satisfy the causality, even when an attempt is made to provide an adaptive structure by using an LMS algorithm in order to cause the FDTS/DFE to control the FFF, such a structure still does not work properly. The reason is that, with the error detection provided by the FDTS/DFE, it is impossible to determine whether the error is due to the leading-edge ISI or the trailing-edge ISI. As a result, the determination settles to a local minimum solution to only permit equalization with a large amount of equalization error left.

SUMMARY OF THE INVENTION

Accordingly, an object of the present invention is to provide an adaptive equalizer that is capable of performing adequate equalization processing using an FDTS/DFE or the like, a decoding device, and an error detecting device.

In order to achieve the foregoing object, the present invention provides an adaptive equalizer. The adaptive equalizer includes a feed-forward filter (FFF) for equalizing a waveform and an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion. The equalization circuit has a configuration of a decision feedback equalizer (DFE). The adaptive equalizer further includes a feed-back filter (FBF) for generating a response for the trailing-edge inter-symbol interference. The equalization circuit subtracts the response generated by the feed-back filter from a response provided by the feed-forward filter so that a result of the subtraction provides a partial response.

The present invention provides a decoding device. The decoding device includes a feed-forward filter (FFF) for equalizing a waveform and an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion. The equalization circuit has a configuration of a decision feedback equalizer (DFE) having a feed-back loop. The decoding device further includes a feed-back filter (FBF) for generating a response for the trailing-edge inter-symbol interference, a noise predictor provided in the feedback loop, and a decoder for performing noise-predictive maximum-likelihood decoding on a signal output from the noise predictor. The equalization circuit subtracts the response generated by the feed-back filter from a response provided by the feed-forward filter so that a result of the subtraction provides a partial response.

The present invention further provides an error detecting device. The error detecting device includes a feed-forward filter (FFF) for equalizing a waveform and an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion. The equalization circuit has a configuration of a decision feedback equalizer (DFE). The error detecting device further includes a feed-back filter (FBF) for generating a response for the trailing-edge inter-symbol interference, a noise predictor provided in the feedback loop, and an error detection circuit. The equalization circuit includes a determination circuit using a fixed delay tree search (FDTS) and subtracts the response generated by the feed-back filter from a response provided by the feed-forward filter so that a result of the subtraction provides a partial response, and the error detection circuit detects error information to be fed back to at least one of automatic gain control and a phase-locked loop by using a determination value provided by the fixed delay tree search.

The present invention further provides an adaptive equalization method. The method includes a step of causing an equalization circuit to perform response according to a partial-response (PR) scheme on only a leading-edge portion of inter-symbol interference (ISI) of a waveform equalized by a feed-forward filter (FFF) and to perform equalization that does not consider trailing-edge inter-symbol interference subsequent to the leading-edge portion, a step of causing a feed-back filter (FBF) to generate a response for the trailing-edge inter-symbol interference, and a step of subtracting the generated response for the trailing-edge inter-symbol interference from a response provided by the feed-back filter so that a result of the subtraction provides a partial response.

According to the adaptive equalizer, the decoding device, and the error detecting device, partial response is performed on only a first portion of ISI of a waveform equalized by the upstream FFF and equalization that does not consider trailing-edge ISI subsequent to the first portion is performed. The FBF generates a response for the trailing-edge ISI and the DFE structure subtracts the generated response from a response provided by the FFF so that a result becomes a PR response. As a result, the present invention allows appropriate equalization processing using FDTS/DFE and so on while performing PR equalization. Further, the present invention can be applied to effective decode processing and error detection.

BRIEF DESCRIPTION OF THE DRAWINGS

FIG. 1 is a block diagram showing a basic configuration of an optical recording apparatus or a magnetic recording apparatus according to an embodiment of the present invention;
FIG. 2 is a block diagram showing details of the PR equalizer shown in FIG. 1;
FIG. 3 is a graph showing an input waveform of the PR equalizer shown in FIG. 2;
FIG. 4 is a block diagram showing the configuration of an FFF provided in the PR equalizer shown in FIG. 2;
FIG. 5 is a block diagram showing the configuration of an FBF provided in the PR equalizer shown in FIG. 2;
FIG. 6 is a block diagram of the configuration of a predictor provided in the PR equalizer shown in FIG. 2;
FIG. 7 illustrates a tree structure of the FDTS for $\tau = 1$;
FIG. 8 is block diagram of the configuration of the FBW provided in the PR equalizer shown in FIG. 2;
FIG. 9 is a block diagram of the configuration of the FDTS unit provided in the PR equalizer shown in FIG. 2;
FIG. 10 is a block diagram of the configuration of the LMS-FFF provided in the PR equalizer shown in FIG. 2;
FIG. 11 is a detailed block diagram illustrating an i-th tap coefficient fi in the FIR coefficient update unit shown in FIG. 10;
FIG. 12 is a detailed block diagram illustrating an i-th tap coefficient hi in the IIR coefficient update unit shown in FIG. 10;
FIG. 13 is a block diagram of the configuration of the LMS-FBF provided in the PR equalizer shown in FIG. 2;

FIG. 14 is a detailed block diagram illustrating an i-th tap coefficient bi in the FIR coefficient update unit shown in FIG. 13;

FIG. 15 is a detailed block diagram illustrating an i-th tap coefficient ci in the IIR coefficient update unit shown in FIG. 13;

FIG. 16 is a block diagram of the configuration of the LMS-predictor provided in the PR equalizer shown in FIG. 2;

FIG. 17 is a detailed block diagram illustrating an i-th tap coefficient fi in the coefficient update unit shown in FIG. 13;

FIG. 18 is a graph illustrating one example of an equalized waveform having leading-edge ISI;

FIG. 19 illustrates an example of characteristic of a phase shifter;

FIG. 20 is illustrates a waveform provided by passing the equalized waveform shown in FIG. 18 through the phase shifter;

FIG. 21 is a block diagram showing details of a PR equalizer that incorporates the block of the phase shifter;

FIG. 22 is a block diagram of the configuration of a phase controller provided in the PR equalizer shown in FIG. 21;

FIG. 23 is a block diagram of the configuration of a level error detector provided in the PR equalizer shown in FIG. 21; and

FIG. 24 is a block diagram of the configuration of a timing error detector provided in the PR equalizer shown in FIG. 21.

DESCRIPTION OF THE PREFERRED EMBODIMENT

According to an embodiment of the present invention, in a waveform equalizer for a communication apparatus, a magnetic recording apparatus, or an optical recording/reproducing apparatus, a feed-forward filter (FFF) is provided and, at a subsequent stage, a decision feedback equalizer (DFE) or a fixed delay tree search/decision feedback equalizer (FDTS/DFE) employing FDTS for a determination unit is provided. Partial response (PR) is performed on only a first portion of inter-symbol interference (ISI) of a waveform equalized by the FFF and equalization that does not consider subsequent response (herein after referred to as "trailing-edge ISI") is performed. A feed-back filter (FBF) generates a response for the trailing-edge ISI and the DFE structure subtracts the generated response from a response provided by the FFF so that a result becomes a partial response.

An embodiment of the present invention will now be described with reference to the accompanying drawings.

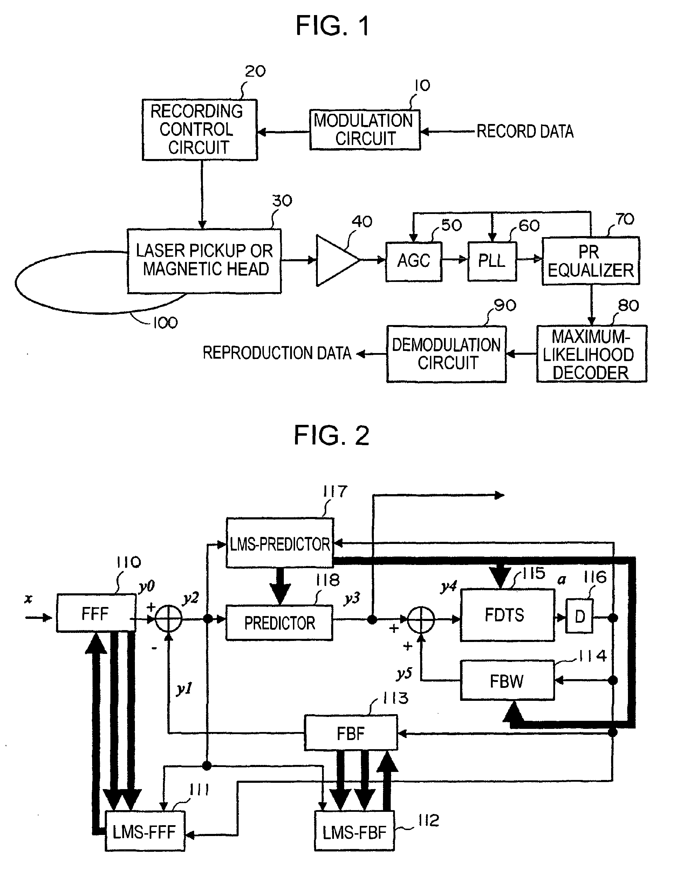

FIG. 1 is a block diagram showing a basic configuration of an optical recording apparatus or a magnetic recording apparatus according to an embodiment of the present invention.

As shown in FIG. 1, the apparatus includes a modulation circuit 10, a recording control circuit 20 for controlling recording current for a recording laser or a magnetic head in accordance with a modulation signal, a laser pickup or magnetic head 30 for recording/reproducing various types of data to/from a medium 100, a reproduction amplifier 40, an automatic gain control (AGC) 50, a phase-locked loop (PLL) 60, a partial-response (PR) equalizer 70, a maximum-likelihood decoder 80, and a demodulation circuit 90.

FIG. 2 is a block diagram showing details of the PR equalizer 70 shown in FIG. 1.

As shown, the PR equalizer 70 includes a feed-forward filter (FFF) 110, a least-mean-square feed-forward filter (LMS-FFF) 111, a least-mean-square feed-back filter (LMS-FBF) 112, an FBF 113, a Feed Back Whitener (FBW) 114, a fixed delay tree search (FDTS) unit 115, a delay unit 116, an LMS predictor 117, and a predictor 118.

The PLL 60 samples discrete data so that a reproduction input waveform is produced at the timing of a PR detecting point and supplies the discrete data to the FFF 110 based on a clock. All the blocks shown in FIG. 2 are digital circuits that operate based on the clock.

A description is now given in conjunction with an example of an input waveform and an equalized waveform. The description, however, is merely one example and thus does not restrict the claims of the present invention.

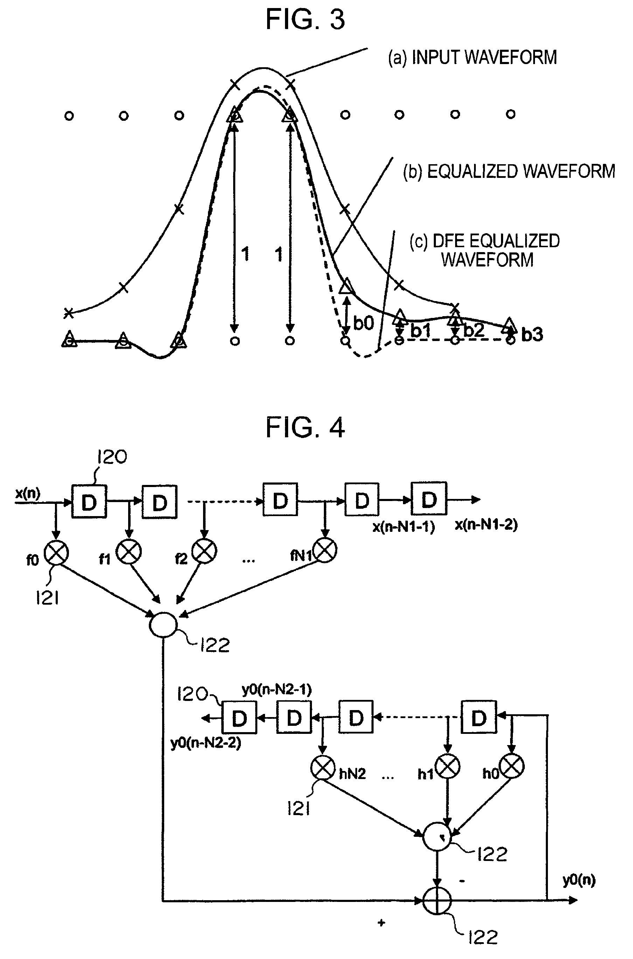

First, a sampled readout waveform, as indicated by waveform (a) in FIG. 3, is input to the FFF 110 shown in FIG. 2. For example, when an attempt is made to equalize a waveform for first two pieces of data to PR(11), an output having an equalized waveform as indicated by waveform (b) shown in FIG. 3 is obtained.

The FFF 110 is a digital filter for performing the calculation:

$$y0_n = \sum_{i=0}^{N_1} f_i \bullet x_{n-i} - \sum_{i=0}^{N_2} h_i \bullet y0_{n-i} \qquad (1)$$

Referring to FIG. 4, the FFF 110 has a configuration in which delay units 120, multipliers 121, and adders 122 are connected as shown. Coefficients fi and hi (i is an integer) are defined by values supplied from an LMS block (described below) for the FFF 110. Delay elements corresponding to an FDTS tree length ("2" in this case) are provided in order to obtain x(n-N1-2) and y0(n-N2-2), respectively. These values are irrelevant to the above-noted digital filter calculation but are required for calculation of the LMS block (described below) for the FFF 110.

The FBF 113 shown in FIG. 2 has tap coefficients, bi (i= 0, 1, ..., and L1) and ci (i = 0, 1, ..., and L2), supplied from an LMS block (described below) for the FBW 113 in order to cancel the trailing-edge ISI after the third pieces of data in the equalized waveform indicated by waveform (b) shown in FIG. 3. The FBF 113 is a digital filter for calculating the following:

$$y1_n = \sum_{i=0}^{L_1} b_i \bullet \hat{a}_{n-2-i} - \sum_{i=0}^{L_2} c_i \bullet y1_{n-i} \qquad (2)$$

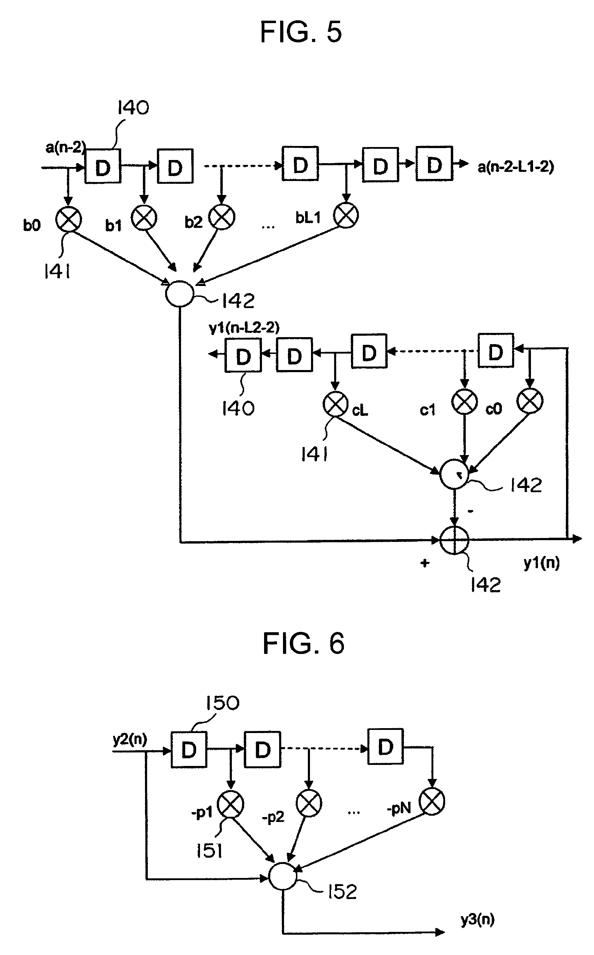

The FBF 113 has a configuration in which delay units 140, multipliers 141, and adders 142 are connected as shown in FIG. 5. The above description, however, has been given based on an assumption that the values of hk (k = 0, 1, ..., and L2) are all 0s. Coefficients fi and hi (i is an integer) are defined by values supplied from the LMS block (described below) for the FFF 110. Delay elements corresponding to the FDTS tree length ("2" in this case) are also provided in order to obtain a(n-2-L1-2) and y1(n-L2-2). These values are irrelevant to the above-noted digital filter calculation but are required for calculation (described below) of an FBF LMS block. Data a(n-2), i.e., 0 or 1, which is an FDTS determination result, is input to the FBF 113.

However, when the trailing-edge ISI does not exist and the values of bk (k = 0, 1, ..., and L1) are all 0s, this is equivalent to a case in which no FBF is provided and thus the FBF is not necessarily required.

The determination result is then subtracted from the FFF equalized waveform (i.e., waveform (a) shown in FIG. 3) by a subtractor and the resulting waveform is shaped to have waveform PR(11) in waveform (c) shown in FIG. 3. The shaped waveform, y2(n), can be expressed as:

$$y2_n = y0_n - y1_n \qquad (3)$$

The predictor 118 shown in FIG. 2 is a block for whitening noise and has a prediction coefficient pk (k = 1, 2, ..., and N) therefor. How to determine pk will be described later. The predictor 118 is a digital filter for calculating the following:

$$y3_n = y2_n - \sum_{i=1}^{N} p_i \bullet y2_{n-i} \qquad (4)$$

The predictor 118 has a configuration in which delay units 150, multipliers 151, and an adder 152 are connected as shown in FIG. 6.

Next, the operation of the FDTS 115 will be described.

Branch metric calculation for the FDTS is performed according to expression (7) described in E. Eleftheriou and W. Hirt, "Noise-predictive maximum-likelihood (NPML) detection for the magnetic recording channel" in IEEE Conf. Records, ICC'96, June 1996, pp. 556-560. Herein, however, it is assumed that a minimum metric is used and the symbol of the expression is reversed. In addition, although the paper describes an example of RP4, the calculation herein is performed for an example of PR(11). Further, an example of the FDTS cut-off depth of $\tau = 1$ is discussed herein.

The transfer function, P(D), can be given by:

$$P(D) = p_1 \cdot D + p_2 \cdot D^2 + \cdots + p_N \cdot D^N \qquad (5)$$

Since the predictor transfer function for PR (11) is 1+D, G(D) is defined as:

$$G(D) = (1 + D) \cdot (1 - P(D)) \equiv 1 - g_1 \cdot D \cdots - g_{N+1} \cdot D^{N+1} \qquad (6)$$

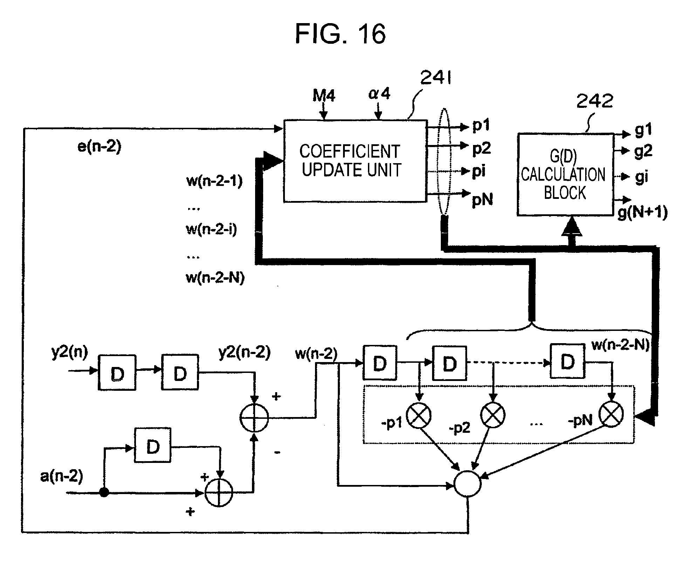

This coefficient gi is calculated by a G(D) calculation block in the LMS predictor 117, which is described below and shown in FIG. 16.

Branch metric for time n is given by:

$$\lambda_n = (y3_n + \sum_{i=2}^{N+2} a_{n-i} \cdot g_i + a_{n-1} \cdot g_1 - a_n)^2 \tag{7}$$

The FBW unit 114 in the DFE structure uses a provisional determination value to calculate the following:

$$y5_n = \sum_{i=2}^{N+2} a_{n-i} \cdot g_i \tag{8}$$

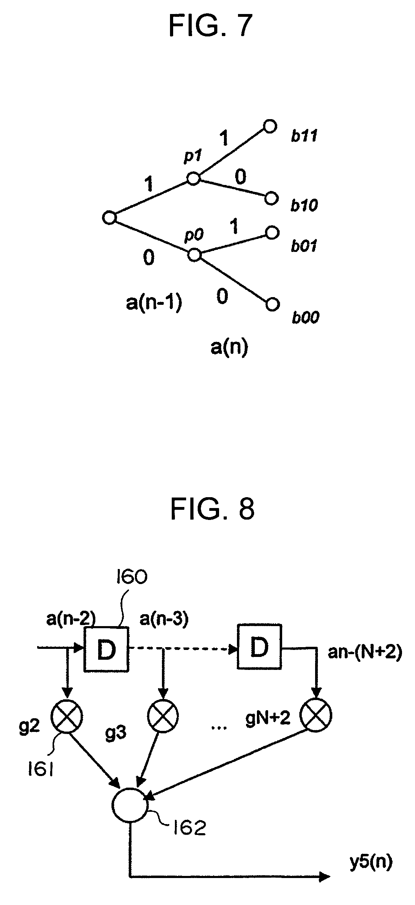

The FBW includes delay units 160, multipliers 161, and an adder 162, as shown in FIG. 8.

Next, the expression of the branch metric is rewritten using y4 shown in FIG. 2.

$$\lambda_n = (y4_n + a_{n-1} \cdot g_1 - a_n)^2 \tag{9}$$

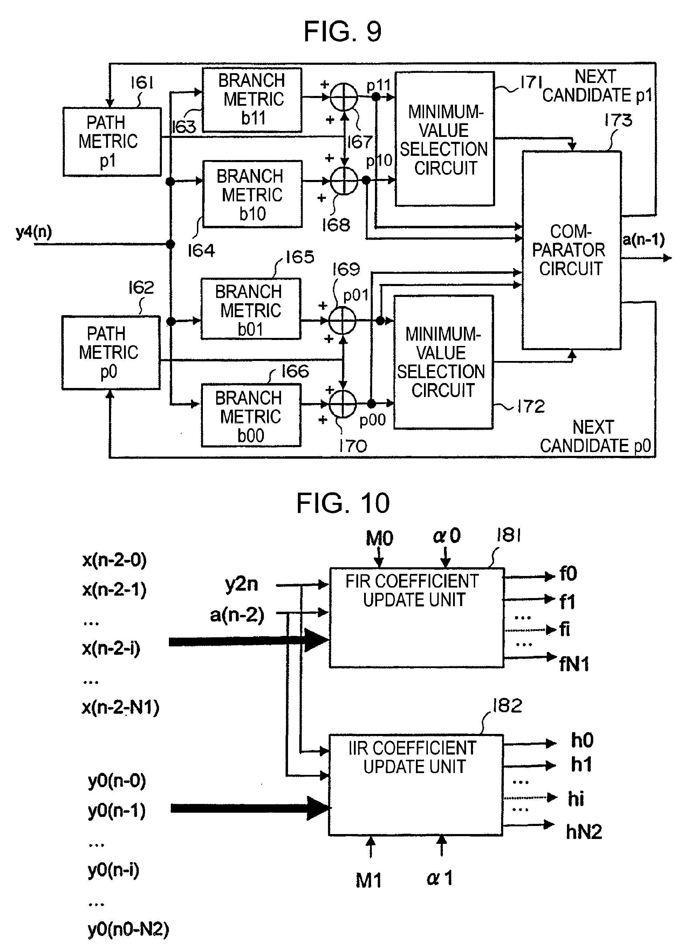

The tree structure of FDTS for $\tau = 1$ is shown in FIG. 7. The internal structure of the FDTS calculation unit is shown in FIG. 9. As shown in FIG. 9, the FDTS calculation device includes path-metric calculation blocks 161 and 162, branch metric calculation units 163 to 166, adders 167 to 170, minimum-value selection circuits 171 and 172, and a comparator circuit 173.

Here, in accordance with the values a(n) and a(n-1) of branches shown in FIG. 7, the following calculations are performed for branch metrics b11, b10, b01, and b00.

$$b11 = (y4_n + g_1 - 1)^2$$

$$b10 = (y4_n + g_1)^2$$

$$b01 = (y4_n - 1)^2$$

$$b00 = (y4_n)^2 \tag{10}$$

These calculations correspond to the branch-metric calculation units 163 to 166, respectively. For path metrics p11, p10, p01, and p00, the following calculations are performed.

$$p11 = p1 + b11$$

$$p10 = p1 + b10$$

$$p01 = p0 + b01$$

$$p00 = p0 + b00 \tag{11}$$

These calculations correspond to the adders 167 to 170 for adding outputs from the path-metric calculation blocks 161 and 162 and outputs from the branch-metric calculation blocks 163 to 166.

In order to determine the value of a(n-1), the minimum-value selection circuits 171 and 172 shown in FIG. 9 perform calculations of MIN1=min(p11, p10) and MIN=mini(p01, p00), respectively. When the comparator circuit 173 yields the result of MIN1 < MIN0, it is determined as a(n-1)=1, and when the comparator circuit 173 yields the result

of MIN1 $\geq$ MIN0, it is determined as a(n-1)=0.

Path-metrics p11, p10, p01, and p00 are input to the comparator circuit 173 shown in FIG. 9, and the comparator circuit 173 selects next candidates p1 and p0 for output. Specifically, the comparator circuit 173 performs update so that p1=p11 and p0=p10 are satisfied for MIN1 < MIN0 and p1=p01 and p0=p00 are satisfied for MIN1 $\geq$ MIN0.

Next, the operation of the LMS-FFF 111, which is an LMS block for the FFF 110, will be described.

FIG. 10 is an internal block diagram of the LMS-FFF 111. As shown, the LMS-FFF 111 includes a finite-impulse-response (FIR) coefficient update unit 181 and an infinite-impulse-response (IIR) coefficient update unit 182. The results of coefficient updates are output to corresponding FIR and IIR tap-coefficient terminals. An evaluation function, F(n), for an FFF output waveform is given as follows:

$$F(n) = \{y2_n - (a_n + a_{n-1})\}^2 \tag{12}$$

where n indicates current time.

In the LMS algorithm, filter coefficients are controlled so as to minimize square error.

For example, when partial differentiation is performed with respect to coefficient fi for an FIR section with FFF tap number i, the following is given:

$$\frac{\partial}{\partial f_i} F(n) = 2\{y2_n - (a_n + a_{n-1})\} \cdot x_{n-i} \tag{13}$$

In practice, however, since the FDTS in this system has a fixed delay, a determination result with a delay of $\tau + 1 = 2$ is provided and thus the following partial differentiation is performed.

$$\frac{\partial}{\partial f_i} F(n-2) = 2\{y2_{n-2} - (a_{n-2} + a_{n-3})\} \cdot x_{n-2-i} \tag{14}$$

This calculation is performed internally by the FIR coefficient update unit 181 shown in FIG. 10.

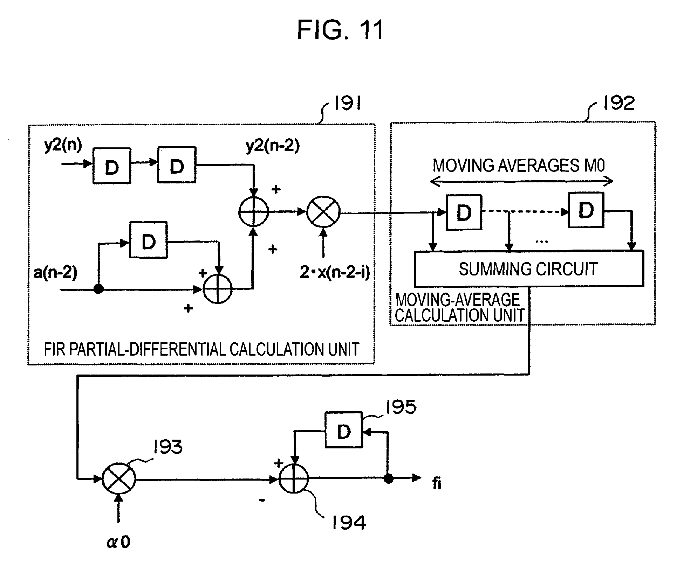

FIG. 11 is a detailed block diagram illustrating the i-th tap coefficient fi in the FIR-coefficient update unit 181 shown in FIG. 10. Although FIR coefficient update sections (only one of which is shown in FIG. 11) are provided such that the number thereof is equal to the number of tap coefficients, i.e., N1+1, an example of the i-th tap coefficient is described since all the structures of the FIR coefficient update sections are the same.

As shown, the FIR coefficient update section includes an FIR partial-differential calculation unit 191 and a moving average calculation unit 192, a multiplier 193, a subtractor 194, and a delay unit 195.

The above-noted partial differentiation is performed by the FIR partial-differential calculation unit 191. The result of the partial differentiation is used to perform moving-average calculation with respect to moving averages M0 provided by the moving average calculation unit 192. The result is then multiplied by an update coefficient $\alpha0$ and the resulting value is subtracted from fi obtained during the previous clock cycle, thereby performing update.

Similarly, partial differentiation with respect to coefficient hi in the IIR unit 182 is given by:

$$\frac{\partial}{\partial h_i} F(n) = 2\{y2_n - (a_n + a_{n-1})\} \cdot (-y0_{n-i}) \tag{15}$$

In practice, however, since the FDTS in this system has a fixed delay, a determination result with a delay of $\tau + 1 = 2$ is provided and thus the following partial differentiation is performed.

$$\frac{\partial}{\partial h_i} F(n-2) = 2\{y2_{n-2} - (a_{n-2} + a_{n-3})\} \cdot (-y0_{n-2-i}) \tag{16}$$

This calculation is performed by the IIR coefficient update unit 182 shown in FIG. 10.

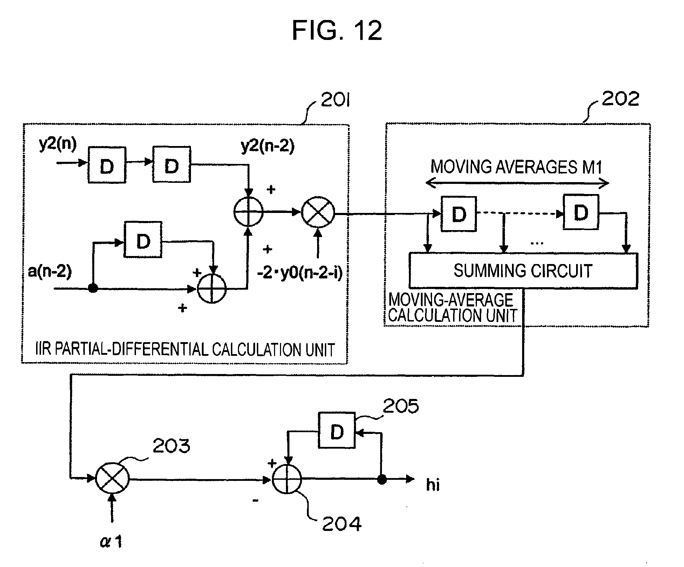

FIG. 12 is a detailed block diagram illustrating the i-th tap coefficient hi in the IIR-coefficient update unit 182 shown in FIG. 10. Although IIR coefficient update sections (only one of which is shown in FIG. 12) are provided such that the number thereof is equal to the number of tap coefficients, i.e., N2+1, an example of the i-th tap coefficient is described since all the structures of the IIR coefficient update sections are the same.

As shown, the IIR coefficient update section includes an IIR coefficient calculation unit 201, a moving average calculation unit 202, a multiplier 203, a subtractor 204, and a delay unit 205.

The above-noted partial differentiation is performed by the IIR partial-differential calculation unit 201. The result of the partial differentiation is used to perform moving-average calculation with respect to moving averages M1 provided by the moving average calculation unit 192. The result is then multiplied by an update coefficient $\alpha1$ and the resulting value is subtracted from hi obtained during the previous clock cycle, thereby performing update.

Next, the operation of the LMS-FBF 112, which is an LMS block for the FBF 113, will be described.

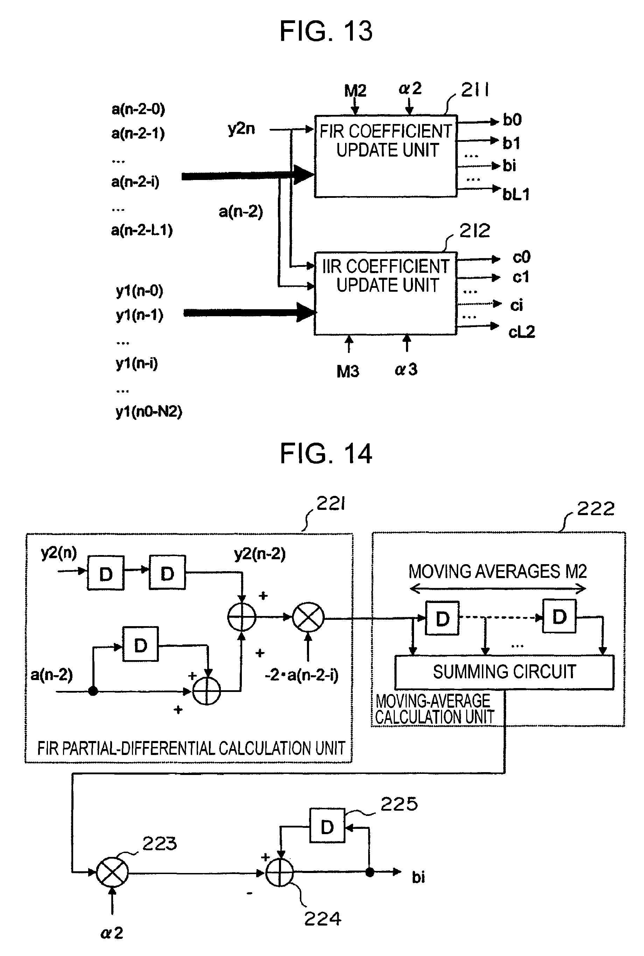

FIG. 13 is a block diagram of the internal configuration of the LMS-FBF 112. As shown, the LMS-FBF 112 includes an FIR coefficient update unit 211 and an IIR coefficient update unit 212. The results of coefficient updates are output to corresponding FIR and IIR tap-coefficient terminals.

An evaluation function, F(n), for an FBF output waveform is discussed similarly to the case of the FFF.

For example, when partial differentiation is performed with respect to coefficient bi for tap number i in the FIR unit for the FBF 113, the following is given:

$$\frac{\partial}{\partial b_i} F(n) = 2\{y2_n - (a_n + a_{n-1})\}\cdot(-a_{n-2-i}) \tag{17}$$

In practice, however, since the FDTS in this system has a fixed delay, a determination result with a delay of $\tau + 1 = 2$ is provided and thus the following partial differentiation is performed.

$$\frac{\partial}{\partial b_i} F(n-2) = 2\{y2_{n-2} -(a_{n-2} + a_{n-3})\}\cdot(-a_{n-4-i}) \tag{18}$$

This calculation is performed internally by the FIR coefficient update unit 211.

FIG. 14 is a detailed block diagram illustrating the i-th tap coefficient bi in the FIR-coefficient update unit 211. Although FIR coefficient update sections shown in FIG. 14 (only one of which is shown) are provided such that the number thereof is equal to the number of tap coefficients, i.e., L1+1, an example of the i-th tap coefficient is described since all the structures of the FIR coefficient update sections are the same.

As shown, the FIR coefficient update section includes an FIR partial-differential calculation unit 221 and a moving average calculation unit 222, a multiplier 223, a subtractor 224, and a delay unit 225.

The above-noted partial differentiation is performed by the FIR partial-differential calculation unit 221. The result of the partial differentiation is used to perform moving-average calculation with respect to moving averages M2 provided by the moving average calculation unit 222. The result is then multiplied by an update coefficient $\alpha2$ and the resulting value is subtracted from bi obtained during the previous clock cycle, thereby performing update.

Similarly, partial differentiation with respect to coefficient ci of the IIR unit is given by:

$$\frac{\partial}{\partial c_i} F(n) = 2\{y2_n - (a_n + a_{n-1})\}\cdot y1_{n-i} \tag{19}$$

This calculation is performed by the IIR coefficient update unit 212.

In practice, however, since the FDTS in this system has a fixed delay, a determination result with a delay of $\tau + 1 = 2$ is provided and thus the following partial differentiation is performed.

$$\frac{\partial}{\partial c_i} F(n-2) = 2\{y2_{n-2} - (a_{n-2}-(a_{n-2} + a_{n-3})\}\cdot y1_{n-2-i} \tag{20}$$

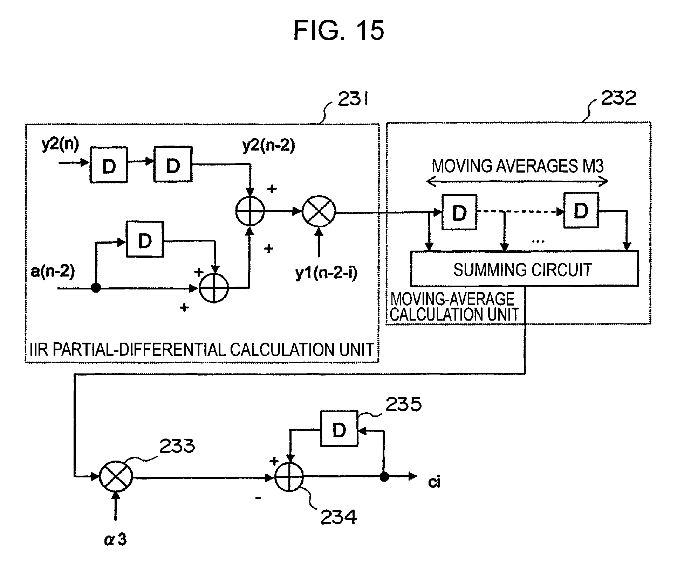

FIG. 15 is a detailed block diagram illustrating the i-th tap coefficient ci in the IIR coefficient update unit 212. Although FIR coefficient update sections (only one of which is shown in FIG. 15) are provided such that the number thereof is equal to the number of tap coefficients, i.e., L2+1, an example of the i-th tap coefficient is described since all the structures of the FIR coefficient update sections are the same.

As shown, the IIR coefficient update section includes an IIR partial-differential calculation unit 231 and a moving average calculation unit 232, a multiplier 233, a subtractor 234, and a delay unit 235.

The above-noted partial differentiation is performed by the IIR partial-differential calculation unit 231. The result of the partial differentiation is used to perform moving-average calculation with respect to moving averages M3 provided by the moving average calculation unit 232. The result is then multiplied by an update coefficient $\alpha3$ and the resulting value is subtracted from ci obtained during the previous clock cycle, thereby performing update.

The LMS predictor 117 will be described next.

FIG. 16 is an internal block diagram of the LMS predictor 117.

The LMS predictor 117 has a coefficient update unit 241, a G(D) calculation block 242, and so on. To the LMS predictor 117, y2n and FDTS determination result a(n-2) are input, and an error signal w(n-2) at time n-2 is calculated. This w(n-2) is input to an FIR noise predictor, and the result and a signal indicating w(n-2-i) are input to the coefficient update unit 241, so that each tap coefficient pi (i = 1, 2, ..., and N) is updated.

Now, the following $e^2(n)$ is considered as a predictor evaluation function.

$$e^2(n) = \left\{ w_n - \sum_{i=1}^{N} w_{n-i} \cdot p_i \right\}^2 \tag{21}$$

where n indicates current time.

Now, a method for minimizing the value by using an LMS algorithm is considered.

For example, when partial differentiation is performed with respect to coefficient pi for tap number i in the predictor, the following is given.

$$\frac{\partial}{\partial p_i}\left[e^2(n)\right] = 2\left\{ w_n - \sum_{j=1}^{N} w_{n-j} \cdot p_j \right\} \cdot w_{n-i} \tag{22}$$

In practice, however, since the FDTS in this system has a fixed delay, a determination result with a delay of $\tau + 1 = 2$ is provided and thus the following partial differentiation is performed.

$$\frac{\partial}{\partial p_i}\left[e^2(n-2)\right] = 2\left\{ w_{n-2} - \sum_{j=1}^{N} w_{n-2-j} \cdot p_j \right\} \cdot w_{n-2-i} \tag{23}$$

This calculation is performed internally by the coefficient update unit 241.

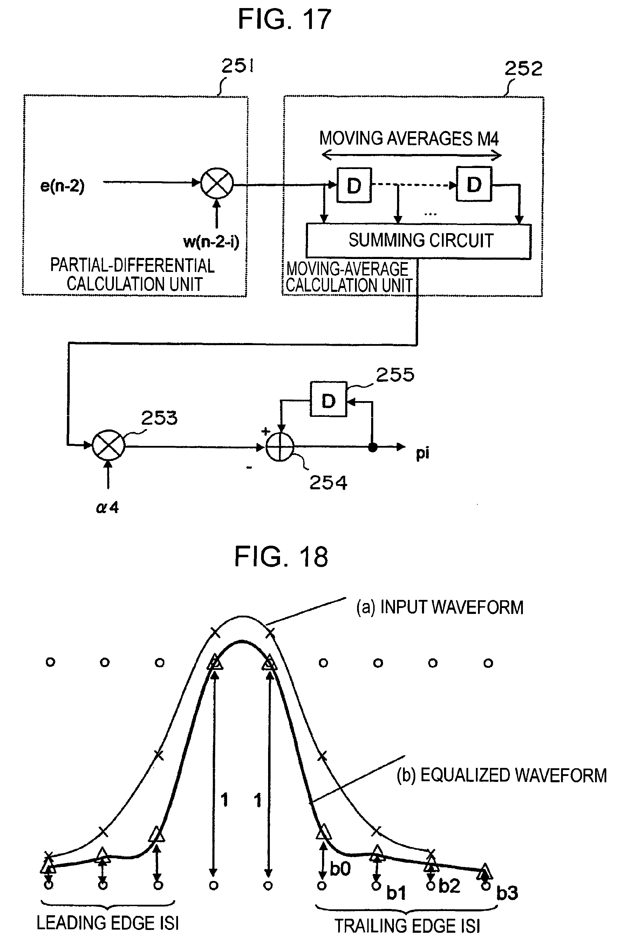

FIG. 17 is a detailed block diagram illustrating the i-th tap coefficient pi in the coefficient update unit 241. Although coefficient update sections (only one is shown in FIG. 17) are provided such that the number thereof is equal to the number of tap coefficients, i.e., N, an example of the i-th tap coefficient is described since all the structures of the coefficient update sections are the same.

As shown, the coefficient update section includes a partial-differential calculation unit 251 and a moving average calculation unit 252, a multiplier 253, a subtractor 254, and a delay unit 255.

The above-noted partial differentiation is performed by the partial-differential calculation unit 251. The result of the partial differentiation is used to perform moving-average calculation with respect to moving averages M4 provided by the moving average calculation unit 252. The result is then multiplied by an update coefficient $\alpha4$ and the resulting value is subtracted from pi obtained during the previous clock cycle, thereby performing update.

As described above, the PR(11) adaptive equalizer has the hybrid configuration of the FFF and the FDTS/DFE.

The above description has been given for a case in which an equalized waveform lacks leading-edge ISI, as shown in FIG. 3. Now, a method for equalizing an equalized waveform having leading-edge ISI, as shown in FIG. 18, will be described.

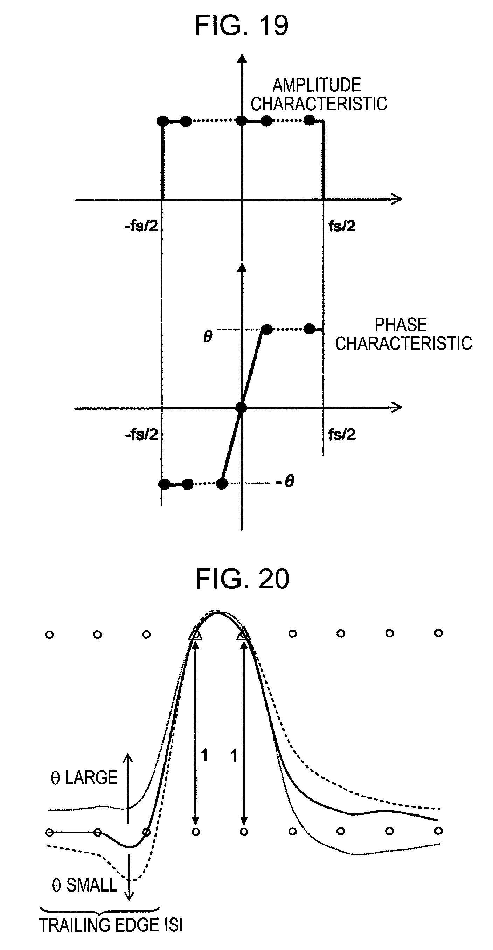

First, an operation for, for example, rotating the phase of the equalized waveform having the leading-edge ISI is considered. Rotating phase θ means, when viewed along a frequency axis, multiplication of phase θ by a characteristic as shown in FIG. 19. The character, fs, represents a sampling frequency.

Now, an FIR having a tap coefficient obtained by performing Inverse Discrete Fourier Transform (IDFT) on the frequency characteristic shown in FIG. 19 is defined as a phase shifter.

FIG. 20 shows a waveform obtained by passing an equalized waveform through the phase shifter.

It is shown that an increase in phase θ causes overshoot in the leading-edge ISI to increase and a decrease in phase θ causes an increase in undershoot in the leading-edge ISI. Thus, applying feedback to θ with automatic control so as to reduce the leading-edge ISI can achieve such equalization that the leading-edge ISI displays a moderately small value.

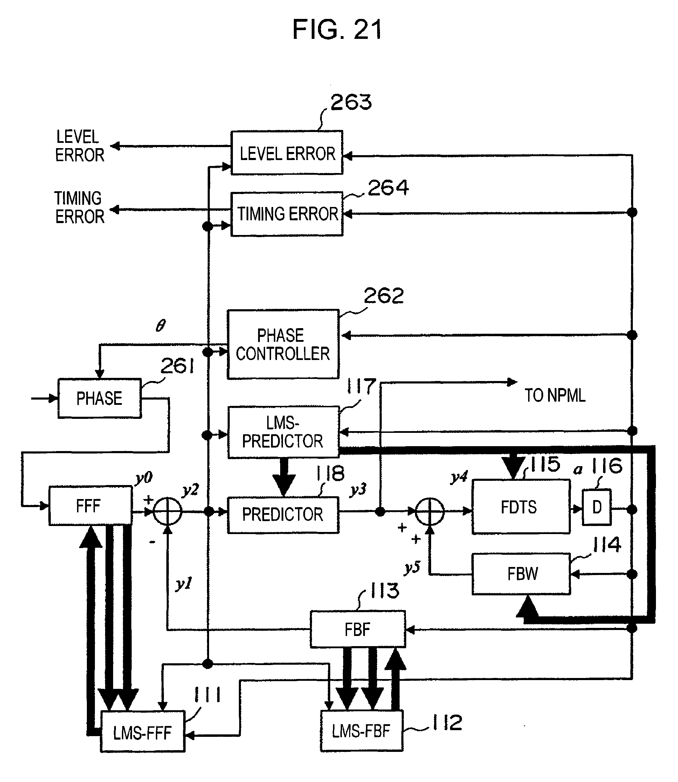

FIG. 21 is a block diagram showing an entire system incorporating the block of the phase shifter.

In addition to the block configuration shown in FIG. 2, this system further includes a phase shifter 261, a phase controller 262, a level error detector 263, and a timing error detector 264.

The phase controller 262 calculates θ and supplies it to the phase shifter 261 and the phase shifter 261 then rotates the phase of an input waveform by θ.

The overshoot shown in FIG. 20 will appear as interference with the leading-edge ISI at a waveform detecting point. When θ is large as shown in FIG. 20, error at a detecting point increases in a positive direction, and when θ is small, error at a detecting point increases in a negative direction. Thus, calculating the following expression can yield a value proportional to the error of θ.

$$\left\{ y2_n - (a_n + a_{n-1}) \right\} \cdot (a_{n+1} + a_n) \qquad (24)$$

In practice, however, data obtained by the FDTS is delayed by an amount of time corresponding to two clocks. Further, since a(n+1) in expression 24 is data subsequent to data obtained at time n, the data cannot be obtained until the next determination. Thus, a determination value obtained with a delay corresponding to another one clock, i.e., a determination value obtained with a delay of total of three clocks is used to calculate the following expression.

$$\left\{ y2_{n-3} - (a_{n-3} + a_{n-3-1}) \right\} \cdot (a_{n-3+1} + a_{n-3}) \qquad (25)$$

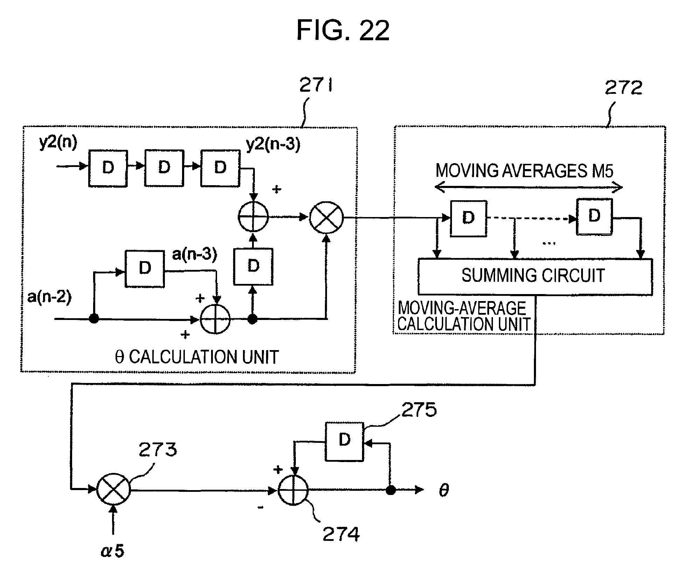

The phase controller 262 is a block that uses the above-noted calculation to update θ. FIG. 22 is a detailed block diagram of the phase controller 262. The phase controller 262 has a θ calculation unit 271, a moving average calculation unit 272, a multiplier 273, a subtractor 274, and a delay unit 275. The θ calculation unit 271 performs the above-noted calculation. A moving average among M5 is determined by the moving average calculation unit 272 and is multiplied by an update coefficient α5, and the resulting value is subtracted from θ obtained during the previous clock cycle.

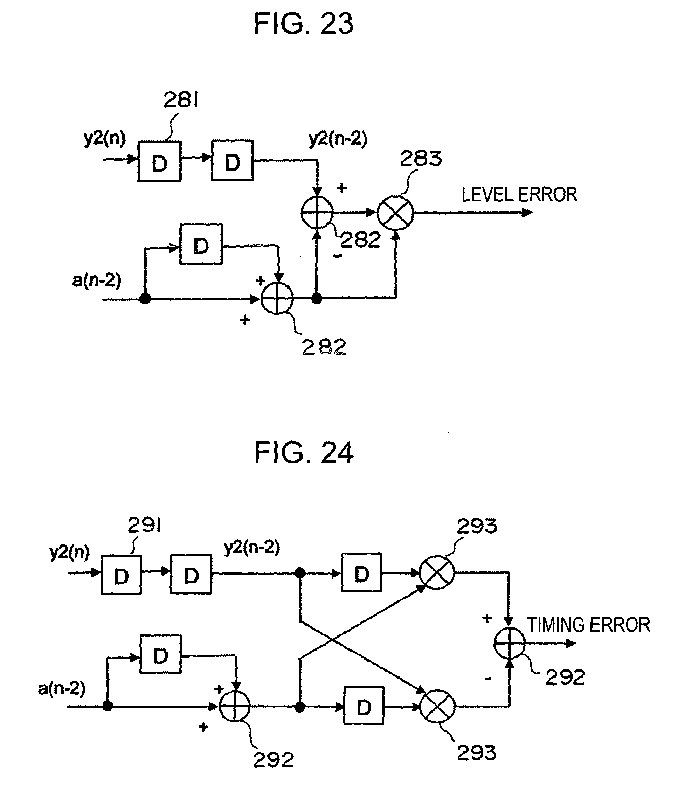

The level error detector 263 will be described next. FIG. 23 is a block diagram of the configuration of the level error detector 263. The level error detector 263 has a configuration in which delay units 281, adders 282, and a multiplier 283 are connected as shown in FIG. 23.

The level error detector 263 calculates a level error by using the following expression.

$$\left\{ y2_n - (a_n + a_{n-1}) \right\} \cdot (a_n + a_{n-1}) \qquad (26)$$

In practice, however, since data provided by the FDTS is delayed by an amount of time corresponding to two clocks, the following partial differentiation is performed.

$$\left\{ y2_{n-2} - (a_{n-2} + a_{n-2-1}) \right\} \cdot (a_{n-2} + a_{n-2-1}) \qquad (27)$$

The timing error detector 264 will be described next. FIG. 24 is a block diagram of the configuration of the timing error detector 264. The timing error detector 264 has a configuration in which delay units 291, adders 292, and multipliers 293 are connected as shown in FIG. 24.

The timing error detector 264 calculates timing error by using the following expression.

$$- y2_n \cdot (a_{n-1} + a_{n-2}) + y2_{n-1} \cdot (a_n + a_{n-1}) \qquad (28)$$

In practice, however, since data provided by the FDTS is delayed by an amount of time corresponding to two clocks, the following partial differentiation is performed.

$$- y2_{n-2} \cdot (a_{n-2-1} + a_{n-2-2}) + y2_{n-2-1} \cdot (a_{n-2} + a_{n-2-1}) \qquad (29)$$

The embodiment having the above-described configuration can provide a determination value based on FDTS with an improved performance compared to a case in which a threshold determining unit is used, while performing PR equalization.

Performing partial response on a first response of a waveform output from the FFF allows a maximum-likelihood decoder suitable for, for example, Viterbi decoding PR, to be arranged at a subsequent stage.

Further, a combination with the noise predictor improves the determination performance of the FDTS. In addition, supplying an output of the noise predictor to the NPML decoder allows for NPML decoding for a waveform having decreased ISI.

Further, conventionally, when a waveform having leading-edge ISI is input to an FDTS/DEF, whether equalization error is due to the leading-edge ISI or the trailing-edge ISI cannot be identified, and thus the leading-edge ISI of the FFF output cannot be adaptively removed. However, according to the present invention, since the phase shifter is provided, it is possible to perform equalization by differentiating equalization error due to the leading-edge ISI.

Additionally, according to the present invention, level error and phase error can be detected from a waveform having a decreased ISI, through the use of a determination provided by the FDTS having an improved determination performance.

## Claims

1. An adaptive equalizer comprising:

   a feed-forward filter (FFF) for equalizing a waveform;
   an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion, the equalization circuit having a configuration of a decision feedback equalizer (DFE); and
   a feed-back filter (FBF) for generating a response for the trailing-edge inter-symbol interference;

   wherein the equalization circuit subtracts the response generated by the feed-back filter from a response provided by the feed-forward filter so that a result of the subtraction provides a partial response.

2. The adaptive equalizer according to claim 1, wherein the decision feedback equalizer has a determination circuit using a fixed delay tree search (FDTS).

3. The adaptive equalizer according to claim 2, wherein the feed-forward filter adaptively equalizes the waveform by using a determination result provided by the fixed delay tree search.

**4.** The adaptive equalizer according to claim 1, wherein the equalization circuit adaptively equalizes the equalized waveform except for the trailing-edge inter-symbol interference to an intended waveform according to the partial-response scheme.

**5.** The adaptive equalizer according to claim 2, wherein the feed-back filter performs adaptive equalization using a determination result provided by the decision feedback equalizer.

**6.** The adaptive equalizer according to claim 1, wherein the feed-back filter comprises a coefficient update unit for adaptively determining a tap coefficient for creating a waveform corresponding to a portion of the trailing-edge inter-symbol interference.

**7.** The adaptive equalizer according to claim 1, wherein the feed-forward filter performs adaptive equalization using a determination result provided by the decision feedback equalizer, and at the same time, the equalization circuit adaptively equalizes the equalized waveform except for the trailing-edge inter-symbol interference to an intended waveform according to the partial-response scheme.

**8.** The adaptive equalizer according to claim 6, wherein the feed-back filter performs processing for performing adaptive equalization using a determination result provided by the decision feedback equalizer at the same time when the coefficient update unit adaptively determines the tap coefficient.

**9.** The adaptive equalizer according to claim 3, wherein the feed-forward filter comprises an input-wave memory, corresponding to a tree length of the fixed delay tree search, for delaying the equalized waveform.

**10.** The adaptive equalizer according to claim 5, wherein the feed-back filter comprises an input-wave memory, corresponding to a tree length of the fixed delay tree search, for delaying the equalized waveform.

**11.** The adaptive equalizer according to claim 1, wherein the feed-forward filter and the feed-back filter comprise a finite-impulse-response (FIR) and infinite-impulse-response (IIR) structure.

**12.** The adaptive equalizer according to claim 1, further comprising a leading-edge-inter-symbol-interference removing circuit for removing, when the waveform equalized by the feed-forward filter leading-edge inter-symbol interference has an unwanted response prior to the partial response, the leading-edge inter-symbol interference.

**13.** The adaptive equalizer according to claim 12, wherein the leading-edge-inter-symbol-interference removing circuit comprises a phase shifter.

**14.** The adaptive equalizer according to claim 12, wherein the leading-edge inter-symbol interference adaptively removes the leading-edge inter-symbol interference.

**15.** The adaptive equalizer according to claim 13, further comprising a phase controller for adaptively providing the phase shifter with an amount of phase shift required for removing the leading-edge inter-symbol interference, to thereby adaptively remove the leading-edge inter-symbol interference.

**16.** The adaptive equalizer according to claim 2, wherein the decision feedback equalizer has a feedback loop in which a noise predictor is provided.

**17.** The adaptive equalizer according to claim 16, further comprising a calculation circuit for controlling the noise predictor such that the noise predictor adaptively predicts noise by using a determination value provided by the fixed delay tree search.

**18.** The adaptive equalizer according to claim 17, wherein the calculation circuit performs adaptive equalization calculation using a least-mean-square (LMS) algorithm by performing finite-impulse-response calculation on an error signal resulting from a difference between a waveform obtained by subtracting a result provided by the feed-back filter from an output of the feed-forward filter and a determination value provided by the fixed delay tree search.

**19.** The adaptive equalizer according to claim 17, wherein an output of the noise predictor is supplied to a noise-predictive maximum-likelihood (NPML) decoder and is decoded.

**20.** The adaptive equalizer according to claim 2, further comprising an error detecting circuit for detecting error information to be fed back to at least one of automatic gain control or a phase locked loop, by using a determination value provided by the fixed delay tree search.

**21.** A decoding device comprising:

a feed-forward filter (FFF) for equalizing a waveform;
an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion, the equalization circuit having a configuration of a decision feedback equalizer (DFE) having a feed-back loop;
a feed-back filter (FBF) for generating a response for the trailing-edge inter-symbol interference;
a noise predictor provided in the feedback loop; and
a decoder for performing noise-predictive maximum-likelihood decoding on a signal output from the noise predictor;

wherein the equalization circuit subtracts the response generated by the feed-back filter from a response provided by the feed-forward filter so that a result of the subtraction provides a partial response.

**22.** The decoding device according to claim 21, wherein the decision feedback equalizer has a determination circuit using a fixed delay tree search (FDTS), and the decoding device further comprises a calculation circuit for controlling the noise predictor such that the noise predictor adaptively predicts noise by using a determination value provided by the fixed delay tree search.

**23.** An error detecting device comprising:

a feed-forward filter (FFF) for equalizing a waveform;
an equalization circuit for performing response according to a partial-response (PR) scheme on only a leading-edge portion of inter-symbol interference (ISI) of the waveform equalized by the feed-forward filter and for performing equalization that does not consider trailing-edge inter-symbol interference subsequent to the leading-edge portion, the equalization circuit having a configuration of a decision feedback equalizer (DFE);
a feed-back filter (FBF) for generating a response for the trailing-edge inter-symbol interference;
a noise predictor provided in the feedback loop; and
an error detection circuit;

wherein the equalization circuit has a determination circuit using a fixed delay tree search (FDTS) and subtracts the response generated by the feed-back filter from a response provided by the feed-forward filter so that a result of the subtraction provides a partial response, and the error detection circuit detects error information to be fed back to at least one of automatic gain control and a phase-locked loop by using a determination value provided by the fixed delay tree search.

**24.** The error detecting device according to claim 23, wherein the error information includes comprises at least one of a level and a timing of a detected signal.

**25.** An adaptive equalization method comprising the steps of:

causing an equalization circuit to perform response according to a partial-response (PR) scheme on only a leading-edge portion of inter-symbol interference (ISI) of a waveform equalized by a feed-forward filter (FFF) and to perform equalization that does not consider trailing-edge inter-symbol interference subsequent to the leading-edge portion;
causing a feed-back filter (FBF) to generate a response for the trailing-edge inter-symbol interference; and
subtracting the generated response for the trailing-edge inter-symbol interference from a response provided by the feed-back filter so that a result of the subtraction provides a partial response.

**26.** The adaptive equalization method according to claim 25, wherein the equalization circuit has a configuration of a decision feedback equalizer having a feedback loop in which a noise predictor is provided.

27. The adaptive equalization method according to claim 26, wherein the noise predictor adaptively predicts noise by using a determination value provided by fixed delay tree search.

28. The adaptive equalization method according to claim 27, wherein adaptive equalization calculation is performed using a least-mean-square (LMS) algorithm by performing finite-impulse-response calculation on an error signal resulting from a difference between a waveform obtained by subtracting a result provided by the feed-back filter from an output of the feed-forward filter and a determination value provided by the fixed delay tree search.

# FIG. 1

RECORDING CONTROL CIRCUIT 20

MODULATION CIRCUIT 10

RECORD DATA

LASER PICKUP OR MAGNETIC HEAD 30

40

AGC 50

PLL 60

PR EQUALIZER 70

100

DEMODULATION CIRCUIT 90

MAXIMUM-LIKELIHOOD DECODER 80

REPRODUCTION DATA

# FIG. 2

LMS-PREDICTOR 117

FFF 110

$x$

$y0$

$y2$

PREDICTOR 118

$y3$

$y4$

FDTS 115

$a$

D 116

FBW 114

$y5$

$y1$

FBF 113

LMS-FFF 111

LMS-FBF 112

15

## FIG. 3

(a) INPUT WAVEFORM

(b) EQUALIZED WAVEFORM

(c) DFE EQUALIZED WAVEFORM

## FIG. 4

# FIG. 5

# FIG. 6

# FIG. 7

# FIG. 8

# FIG. 9

# FIG. 10

## FIG. 11

FIR PARTIAL-DIFFERENTIAL CALCULATION UNIT

MOVING AVERAGES M0

SUMMING CIRCUIT

MOVING-AVERAGE CALCULATION UNIT

# FIG. 12

IIR PARTIAL-DIFFERENTIAL CALCULATION UNIT

MOVING AVERAGES M1

SUMMING CIRCUIT

MOVING-AVERAGE CALCULATION UNIT

y2(n)

y2(n-2)

a(n-2)

-2·y0(n-2-i)

α1

hi

201

202

203

204

205

# FIG. 13

a(n-2-0)

a(n-2-1)

...

a(n-2-i)

...

a(n-2-L1)

M2    α2    211

y2n → FIR COEFFICIENT UPDATE UNIT → b0

→ b1

... → bi

... → bL1

a(n-2)

212

IIR COEFFICIENT UPDATE UNIT → c0

→ c1

... → ci

... → cL2

y1(n-0)

y1(n-1)

...

y1(n-i)

...

y1(n0-N2)

M3    α3

# FIG. 14

221

y2(n) → D → D → y2(n-2)

a(n-2) → D

+

+

+

+

-2·a(n-2-i)

FIR PARTIAL-DIFFERENTIAL CALCULATION UNIT

222

MOVING AVERAGES M2

D ---- D

...

SUMMING CIRCUIT

MOVING-AVERAGE CALCULATION UNIT

223

225

D

+

- 

→ bi

α2

224

# FIG. 15

# FIG. 16

# FIG. 17

251

252

MOVING AVERAGES M4

e(n-2) ⊗

w(n-2-i)

D ----- D

...

SUMMING CIRCUIT

PARTIAL-DIFFERENTIAL
CALCULATION UNIT

MOVING-AVERAGE
CALCULATION UNIT

255

D

253

+

$\oplus$ → pi

-

254

α4

# FIG. 18

(a) INPUT WAVEFORM

(b) EQUALIZED WAVEFORM

1    1

b0

b1

b2

b3

LEADING EDGE ISI

TRAILING EDGE ISI

## FIG. 19

AMPLITUDE
CHARACTERISTIC

-fs/2

fs/2

$\theta$

PHASE
CHARACTERISTIC

-fs/2

fs/2

- $\theta$

## FIG. 20

$\theta$ LARGE

1  1

$\theta$ SMALL

TRAILING EDGE ISI

# FIG. 21

## FIG. 22

271

272

y2(n) → D → D → D → y2(n-3)

MOVING AVERAGES M5

D ---- D

... 

SUMMING CIRCUIT

a(n-2) → D → a(n-3)

D

+ +
+

θ CALCULATION UNIT

MOVING-AVERAGE
CALCULATION UNIT

275

D

273

274

+
-

→ θ

α5

# FIG. 23

# FIG. 24

**European Patent Office**

**EUROPEAN SEARCH REPORT**

Application Number

EP 04 29 2566

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BROWN J E C ET AL: "A CMOS ADAPTIVE CONTINOUS-TIME FORWARD EQUALIZER, LPF, AND RAM-DFE FOR MAGNETIC RECORDING" IEEE JOURNAL OF SOLID-STATE CIRCUITS, IEEE INC. NEW YORK, US, vol. 34, no. 2, February 1999 (1999-02), pages 162-169, XP000893505 ISSN: 0018-9200 * page 162, column 2, line 2 - line 4 * * page 163, column 1, last line - column 2, line 2 * * page 163, column 2, line 14 - line 15 * * page 163, column 2, line 32 - line 34 * * page 166, column 1, line 4 - line 24 * ----- | 1,21,23, 25 | G11B20/10 |
| D,A | ELEFTHERIOU E ET AL INSTITUTE OF ELECTRICAL & ELECTRONICS ENGINEERS: "NOISE-PREDICTIVE MAXIMUM-LIKELIHOOD (NPML) DETECTION FOR THE MAGNETIC RECORDING CHANNEL" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. VOL. 1, 23 June 1996 (1996-06-23), pages 556-560, XP000625733 ISBN: 0-7803-3251-2 * paragraphs [0III], [00IV] * ----- | 1,2,23, 25 | **TECHNICAL FIELDS SEARCHED** (Int.Cl.7)  G11B |
| D,A | MOON J ET AL: "PERFORMANCE COMPARISON OF DETECTION METHODS IN MAGNETIC RECORDING" IEEE TRANSACTIONS ON MAGNETICS, IEEE INC. NEW YORK, US, vol. 26, no. 6, November 1990 (1990-11), pages 3155-3172, XP000200747 ISSN: 0018-9464 * paragraph [IIIC] * ----- | 1,21,23, 25 | |

The present search report has been drawn up for all claims

| Place of search | Date of completion of the search | Examiner |
|---|---|---|
| The Hague | 22 December 2004 | Van Staveren, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)